# EUROPÄISCHE PATENTSCHRIFT

(11) **EP 3 802 195 B1**
(45) Veröffentlichungstag und Bekanntmachung des Hinweises auf die Patenterteilung: **02.08.2023**
(21) Anmeldenummer: 19714382.9
(22) Anmeldetag: 26.03.2019
(51) Int. Cl.: B60L 53/14, B60L 53/30, H02G 3/04, H02G 3/08

(54) **LADESTATION ZUM AUFLADEN EINES ENERGIESPEICHERS EINES ELEKTROFAHRZEUGS**
CHARGING STATION FOR CHARGING A BATTERY OF AN ELECTRIC VEHICLE
STATION DE CHARGE POUR CHARGER LA BATTERIE D'UN VÉHICULE ÉLECTRIQUE

(30) Priorität: 30.05.2018 DE 102018112985
(43) Veröffentlichungstag der Anmeldung: 14.04.2021
(73) Patentinhaber: Compleo Charging Solutions AG, 44309 Dortmund (DE)
(72) Erfinder: MÜLLER-WINTERBERG, Christian, 46282 Dorsten (DE); HELNERUS, Stefan, 59821 Arnsberg (DE)
(74) Vertreter: Gottschald Patentanwälte Partnerschaft mbB
(86) Internationale Anmeldenummer: PCT/EP2019/057592
(87) Internationale Veröffentlichungsnummer: WO 2019/228690

(56) Entgegenhaltungen:
- EP-A1- 2 573 880
- WO-A1-2018/069542
- DE-A1-102012 011 606
- DE-A1-102012 016 481
- DE-A1-102012 103 213
- DE-A1-102016 205 117
- DE-U1-202015 104 315
- FR-A1- 2 924 276
- FR-A1- 2 972 145

## Beschreibung

Die Erfindung betrifft eine Ladestation zum Aufladen eines Energiespeichers eines Elektrofahrzeugs, welche ein Gehäuse mit einem innerhalb des Gehäuses angeordneten Raum zur Aufnahme von elektronischen Komponenten aufweist, und einen mit dem Gehäuse verbindbaren Abdeckmodul, welches mindestens ein Deckelelement und/oder eine Anschlusseinheit umfasst, wobei die Anschlusseinheit zum Anordnen und/oder Verbinden eines Aufladeelements, insbesondere eines Ladesteckers oder einer Ladesteckdose vorgesehen ist, wobei zumindest zwischen dem Gehäuse und dem Abdeckmodul mindestens ein erstes Dichtelement vorgesehen ist.

Aus dem Stand der Technik ist eine Ladestation bekannt, welche zum Aufladen eines Energiespeichers eines Elektrofahrzeugs dient. Die Ladestation weist ein Gehäuse mit einem Raum auf, in welchem elektronische Komponenten, wie beispielsweise Leiterplatten, Steckkontakte, Kondensatoren und dergleichen angeordnet sind. Das Gehäuse wird mit einem Deckel verschlossen, wobei zwischen dem Gehäuse und dem Deckel eine Gummidichtung angeordnet ist, welche die elektronischen Komponenten vor dem Eindringen von Staub und Flüssigkeit in den innerhalb des Gehäuses angeordneten Raum schützt. Diese Gummidichtung sorgt für eine derartige Abdichtung, dass nur ein geringer und eingeschränkter Luftaustausch zwischen einer äußeren Umgebung der Ladesäule und dem in dem Gehäuse abgedichteten Raum der Ladestation stattfindet. Verändert sich nun die Temperatur in der Umgebung kann es innerhalb der Ladestation, insbesondere in dem Raum des Gehäuses zu einer unerwünschten Tauwasserbildung kommen, die die elektronischen Komponenten beschädigen könnte. DE 10 2012 011606 A1 offenbart eine Ladestation zum Aufladen eines Energiespeichers eines Elektrofahrzeugs, welche ein Gehäuse mit einem innerhalb des Gehäuses angeordneten Raum zur Aufnahme von elektronischen Komponenten aufweist, und einen mit dem Gehäuse verbindbaren Abdeckmodul, welches mindestens ein Deckelelement und eine Anschlusseinheit umfasst, wobei die Anschlusseinheit zum Anordnen und/oder Verbinden eines Aufladeelements, insbesondere eines Ladesteckers oder einer Ladesteckdose vorgesehen ist, weiterhin aufweisend ein Luftstromkanal ausser dem Gehäuse. EP 2 573 880 A1 offenbart eine Ladebuchse aufweisend eine Drainageöffnung. DE 10 2016 205117 A1 offenbart eine Ladebuchse aufweisend eine Membrane.

Daher ist es die Aufgabe der Erfindung eine Ladestation bereitzustellen, welche unabhängig von umweltbedingten Temperaturschwankungen zuverlässig betreibbar ist.

Die Aufgabe wird gelöst durch den Patentanspruch 1, insbesondere durch den kennzeichnenden Teil des Patentanspruchs 1. Dabei ist vorgesehen, dass das Abdeckmodul und/oder das Gehäuse mindestens ein Membranelement aufweist, welches zum Austausch von Luft- und/oder Wassermolekülen zwischen dem Raum innerhalb des Gehäuses und einer außerhalb des Gehäuses angeordneten Umwelt ausgebildet ist. Die Ladestation kann beispielsweise in einer freien Umgebung, insbesondere an einer Straße oder in einer Garage angeordnet sein, so dass stets mit Temperaturschwankungen zu rechnen ist. Die Temperaturschwankungen in der äußeren Umgebung können zu einer Tauwasserbildung innerhalb des Raums des Gehäuses führen. Das Membranelement sorgt in vorteilhafterweise dafür, dass zwischen der äußeren Umgebung und dem innerhalb des Gehäuses angeordneten Raum, in welchem die elektronischen Komponenten, wie beispielsweise Leiterplatten, Steckkontakte, Kondensatoren und dergleichen angeordnet sind, Luft- und/oder Wassermoleküle ausgetauscht werden. Durch diese Maßnahme wird ausgeschlossen, dass eine zu hohe Luftfeuchtigkeit, insbesondere Tauwasser innerhalb des Gehäuses sich ansammelt und die elektronischen Komponenten beschädigt oder sogar zerstört. Das Membranelement erhöht daher die Lebensdauer der elektronischen Komponenten.

Das Membranelement ist deutlich umweltfreundlicher als andere Schutzelemente wie etwa der Einsatz von Vergussmassen. Das Membranelement ist durch eine Label-Technologie einfach und kostengünstig aufzubringen und lässt sich mit diversen Zusatznutzen kombinieren. Als Verbindungstechnologien können daher das Kleben und das Schweißen dienen.

Nach einer bevorzugten Ausführung der Ladestation ist vorgesehen, dass die Anschlusseinheit mit mindestens einem, vorzugsweise zylinderförmigen Kontaktelement versehen ist, welches insbesondere in Axialrichtung schwimmend innerhalb der Anschlusseinheit gelagert ist. Die Kontaktelemente sind mit einer Elektronik, insbesondere mit einer Platine, welche innerhalb des Gehäuses angeordnet ist, mittelbar oder unmittelbar vorzugsweise über ein Kabel verbunden. Die schwimmende Lagerung weist den Vorteil auf, dass Toleranzen ausgeglichen werden können, und zwar zwischen einer in der Anschlusseinheit angeordneten Kontaktelementaufnahme und dem Kontaktelement selbst. Gewöhnlich werden mehrere Kontaktelemente benötigt, um beispielsweise die Ladestation mit dem Ladestecker elektrisch zu verbinden. Aufgrund der vorzugsweise schwimmenden Lagerung der Kontaktelemente kann auch ein Druckausgleich zwischen der äußeren Umgebung und dem Raum innerhalb des Gehäuses erfolgen. Gleichwohl kann im Wesentlichen kaum oder gar nicht Flüssigkeit über die Kontaktelementaufnahme aus dem Raum innerhalb des Gehäuses entweichen. Folglich ist das Kontaktelement wasserdicht und/oder staubdicht in der Anschlusseinheit angeordnet.

Nach einer weiteren bevorzugten Ausführung der Ladestation kann vorgesehen sein, dass die Anschlusseinheit einen Lagerabschnitt, insbesondere eine Mulde zum Anordnen und/oder Verbinden des Aufladeelements, insbesondere des Ladesteckers oder der Ladesteckdose aufweist. Die Mulde ist beispielsweise als geschlossene Kammer ausgebildet, in welche das Aufladeelement, insbesondere der Ladestecker verstaubar ist, wenn dieser außer Betrieb ist. In diesem Fall wird auf jegliche Kontaktelemente und auch Kontaktelementaufnahmen, welche die Kammer durchdringen könnten, verzichtet. Es ist daher zwingend notwendig, die Ladestation mit einem Membranelement zu versehen, weil ansonsten der Raum innerhalb des Gehäuses dann auch druckdicht gegenüber der äußeren Umgebung ausgebildet wäre. Das Abdeckmodul mit dem entsprechenden Dichtelement würde dann überhaupt keinen Fluidaustausch zwischen dem Raum innerhalb des Gehäuses und der äußeren Umgebung zulassen. Andererseits könnte die Anschlusseinheit, insbesondere die beispielsweise als Mulde ausgebildete Kammer mit dem mindestens einen Kontaktelement versehen werden, welches insbesondere zum Verbinden mit dem Aufladelement, vorzugsweise mit dem Ladestecker dient.

Nach einer weiteren bevorzugten Ausführung der Ladestation kann vorgesehen sein, dass die Anschlusseinheit an dem Gehäuse angeordnet ist und das Deckelelement sowohl mit dem Gehäuse als auch mit der Anschlusseinheit verbunden ist, wobei zwischen der Anschlusseinheit und dem Deckelelement ein zweites Dichtelement angeordnet ist. Durch diese Maßnahme gelingt es, eine modulare Ladestation bereitzustellen, welche die elektronischen Komponenten vor Umwelteinflüssen, insbesondere Feuchtigkeit und Staub schützt.

Die Montage des Membranelements kann einfach durchgeführt werden, wenn das Gehäuse und/oder das Abdeckmodul eine Ausnehmung oder Öffnung aufweist, die zur kraftschlüssigen und/oder formschlüssigen und/oder stoffschlüssigen Anordnung des Membranelements ausgebildet ist. Das Membranelement kann somit sicher und fest an oder in dem Gehäuse und/oder Abdeckmodul befestigt werden, wenn das Membranelement in die Öffnung oder Ausnehmung verrastet ist und/oder eingelegt ist und/oder umspritzt ist und/oder eingeklebt ist. Das Umspritzen bietet zusätzlich den Vorteil, dass das Abdeckmodul und/oder Gehäuse einfach und kostengünstig herstellbar ist, insbesondere dann, wenn das Abdeckmodul, insbesondere die Anschlusseinheit und das Deckelelement und/oder das Gehäuse aus Kunststoff ausgebildet sind.

Nach einer weiteren bevorzugten Ausführung der Ladestation kann vorgesehen sein, dass an der Anschlusseinheit mindestens ein bewegbares Abdeckelement vorgesehen ist, welches im geschlossenen Zustand das Membranelement und/oder den Lagerabschnitt, insbesondere das Kontaktelement verdeckt und im geöffneten Zustand den Lagerabschnitt, insbesondere das Kontaktelement freigibt. Durch diese vorteilhafte Ausgestaltung der Ladestation wird sichergestellt, dass das Membranelement und vorzugsweise die Kontaktelemente vor äußeren Umwelteinflüssen geschützt werden. Ein beabsichtigtes und unbeabsichtigtes Zerstören des dünnschichtig ausgebildeten Membranelements wird somit in vorteilhafterweise verhindert, weil es stets von dem Abdeckelement geschützt wird.

Nach einer weiteren bevorzugten Ausführung der Ladestation kann vorgesehen sein, dass das Abdeckelement das Membranelement zumindest im geöffneten Zustand und/oder im geschlossenen Zustand verdeckt, wobei das Abdeckelement beabstandet zu dem Membranelement angeordnet ist, wobei zwischen dem Membranelement und dem Abdeckelement ein Luftspalt angeordnet ist. Durch diese vorteilhafte Maßnahme gelingt es, das Membranelement weiter vor einer Beschädigung zu schützen. Aufgrund der Beabstandung des Abdeckelements zu dem Membranelement kann zudem sichergestellt werden, dass das Membranelement bei einer Betätigung des Abdeckelements von einer Person oder dem Benutzer beschädigt wird.

Um einen Druckausgleich zwischen dem Raum des Gehäuses und/oder einen Flüssigkeitsaustausch von dem Raum des Gehäuses zu einer Umgebung zu gewährleisten, kann vorgesehen sein, dass das Membranelement fluiddurchlässig, insbesondere gasdurchlässig ausgebildet ist.

Einen sehr einfachen und kompakten Aufbau kann die Ladestation aufweisen, wenn die Anschlusseinheit einen ersten Abschnitt zum Anordnen der Kontaktelemente und einen zweiten Abschnitt zum Anordnen mindestens eines Federelements, vorzugsweise zwei Federelementen sowie einen dritten Abschnitt zum Anordnen des Membranelements aufweist.

Das Abdeckelement kann mit einfachen konstruktiven Mitteln von einer Betriebsstellung wieder zurück in eine Ruhestellung bewegt werden, wenn das mindestens eine Federelement zur bewegbaren Lagerung des Abdeckelements vorgesehen ist, wobei mindestens ein Federelement an dem zweiten Abschnitt, insbesondere an dem Gehäuse befestigt ist und zusätzlich an dem Abdeckelement befestigt ist.

Der in dem Gehäuse benötigte Bauraum kann reduziert werden, wenn der erste Abschnitt als Mulde in dem Gehäuse ausgebildet ist und/oder der zweite Abschnitt als, vorzugsweise U-förmige, Nut in dem Gehäuse ausgebildet ist und/oder der dritte Abschnitt als Schale in dem Gehäuse ausgebildet ist. Wenn beispielsweise Flüssigkeit aus dem Raum des Gehäuses über das Membranelement in die Umgebung strömt, kann diese Flüssigkeit sich in der Schale ansammeln und fließt über den vorzugsweise U-förmig ausgebildeten Abschnitt zu einer Wasserablaufaustrittsöffnung, welche beispielsweise in dem zweiten Abschnitt angeordnet ist. Die Wasserablaufaustrittsöffnung kann mit einem Wasserablauf verbunden sein, welcher zu der Umgebung ausgerichtet ist, um die Flüssigkeit in die Umgebung abzuführen. Aus diesen Gründen kann es daher sinnvoll sein, dass der zweite Abschnitt des Gehäuses, insbesondere die Nut in den dritten Abschnitt des Gehäuses, insbesondere in die Schale mündet.

Wie bereits oben erwähnt, kann es Sinn machen, wenn dass das Membranelement als Druckausgleichselement ausgebildet ist, welches den Druck zwischen dem Raum innerhalb des Gehäuses und der außerhalb des Gehäuses angeordneten Umwelt ausgleicht.

Eine komfortable Lösung kann für einen Benutzer ermöglicht werden, wenn das Gehäuse der Ladestation mit einer Stele oder einer Wandung verbunden ist.

Die erfindungsgemäße Ladestation wird nachfolgend anhand eines Ausführungsbeispiels näher beschrieben. Die Figuren zeigen:
- Figur 1: Eine schematisch dargestellte erfindungsgemäße Ladestation, welche an einer Stele angeordnet ist,
- Figur 2: ein Gehäuse der erfindungsgemäßen Ladestation in einer Ansicht von oben

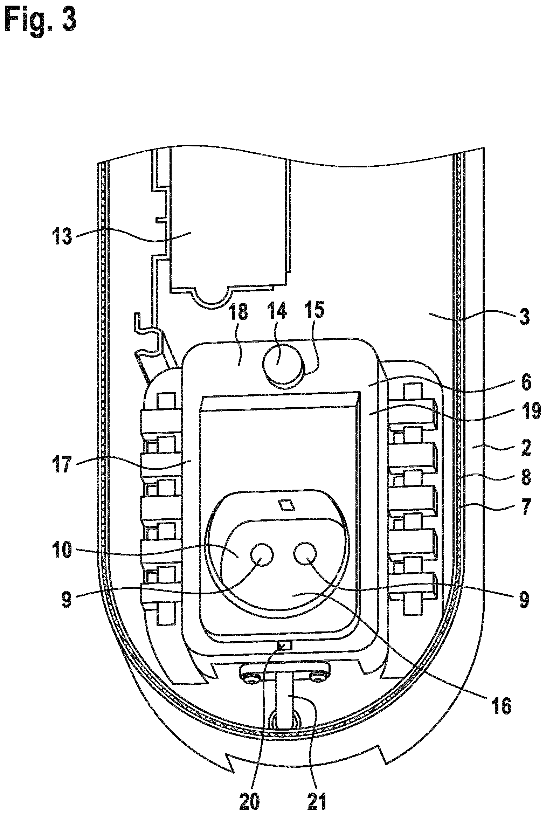

- Figur 3: das Gehäuse aufweisend eine Anschlusseinheit der erfindungsgemäßen Ladestation in einer Ansicht von oben, und
- Figur 4: die Anschlusseinheit der erfindungsgemäßen Ladestation in einer vergrößerten Ansicht von oben.

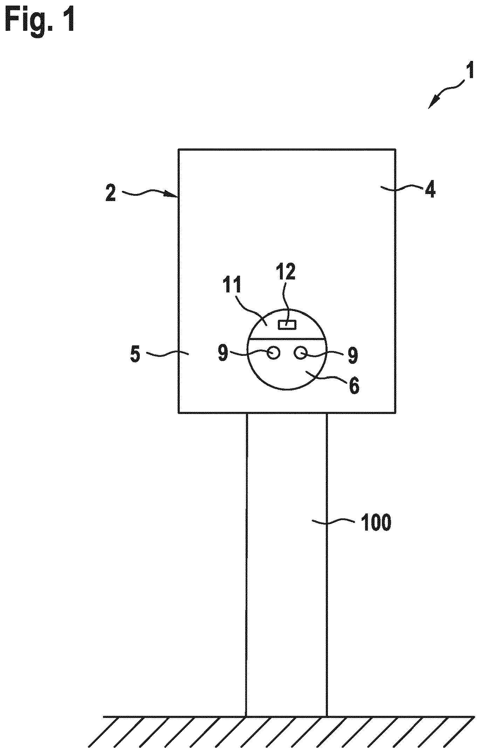

In der Figur 1 ist eine Ladestation 1 zum Aufladen eines Energiespeichers eines nicht näher dargestellten Elektrofahrzeugs schematisch abgebildet, welche an einer Stele 100 oder alternativ mit einer Wandung, die beispielsweise in einer Garage angeordnet ist, verbunden ist. Die Ladestation 1 umfasst ein Gehäuse 2, welches einen Raum 3 zur Aufnahme von elektronischen Komponenten aufweist. Das Gehäuse 2 ist mit einem Abdeckmodul 4 verbunden. Im vorliegenden Ausführungsbeispiel der Ladestation 1 weist das Abdeckmodul 4 mindestens zwei separate Bauteile auf, nämlich ein Deckelelement 5 und eine Anschlusseinheit 6, wobei die Anschlusseinheit 6 zum Anordnen und/oder Verbinden eines Aufladeelements, insbesondere eines Ladesteckers vorgesehen ist. Um den inneren Raum 3 des Gehäuses 2 vor Feuchtigkeit und Schmutz zu schützen, ist zumindest zwischen dem Gehäuse 2 und dem Abdeckmodul 4, insbesondere dem Deckelelement 5 ein erstes Dichtelement 7 angeordnet. Daher ist an dem Gehäuse 2 eine umlaufende Dichtnut 8 vorgesehen, welche als Aufnahme des ersten Dichtelements 7 dient. Die Anschlusseinheit 6 ist ebenfalls mittels einer Rastverbindung kraftschlüssig und/oder formschlüssig mit dem Gehäuse 2 innerhalb des Raums 3 verbunden. Das Deckelelement 5 ist sowohl mit dem Gehäuse 2 als auch mit der Anschlusseinheit 6 verbunden, wobei zwischen der Anschlusseinheit 6 und dem Deckelelement 5 ein zweites nicht näher dargestelltes Dichtelement beispielsweise innerhalb einer umlaufende Dichtnut der Anschlusseinheit 6 angeordnet ist, um den inneren Raum 3 des Gehäuses 2 vor Feuchtigkeit und Schmutz zu schützen.

Des Weiteren ist die Anschlusseinheit 6 mit mindestens einem, vorzugsweise zylinderförmigen Kontaktelement 9 versehen, welches insbesondere in axialer Richtung schwimmend innerhalb der Anschlusseinheit 6 gelagert ist. Dabei ist das Kontaktelement 9 wasserdicht und/oder staubdicht in der Anschlusseinheit 6 angeordnet.

Ferner umfasst die Anschlusseinheit 6 einen hier als Mulde ausgebildeten Lagerabschnitt 10 welcher zum Verbinden des Aufladeelements, insbesondere des Ladesteckers vorgesehen ist. Bei einem Fehlen der Kontaktelement 9 könnte die Mulde 10 zum Anordnen bzw. Verstauen des Ladesteckers dienen.

Außerdem ist an der Anschlusseinheit 6 mindestens ein bewegbares Abdeckelement 11 vorgesehen, welches den Lagerabschnitt 10, insbesondere das Kontaktelement 9 verdeckt, wenn die Ladestation 1 außer Betrieb ist. In einer Betriebsstellung der Ladestation 1 befindet sich das Abdeckelement 11 in einer geöffneten Stellung. Damit ein Benutzer der Ladestation 1 das Abdeckelement 11 komfortabel bewegen kann, ist auf dem Abdeckelement 11 eine Handhabe 12 angeordnet.

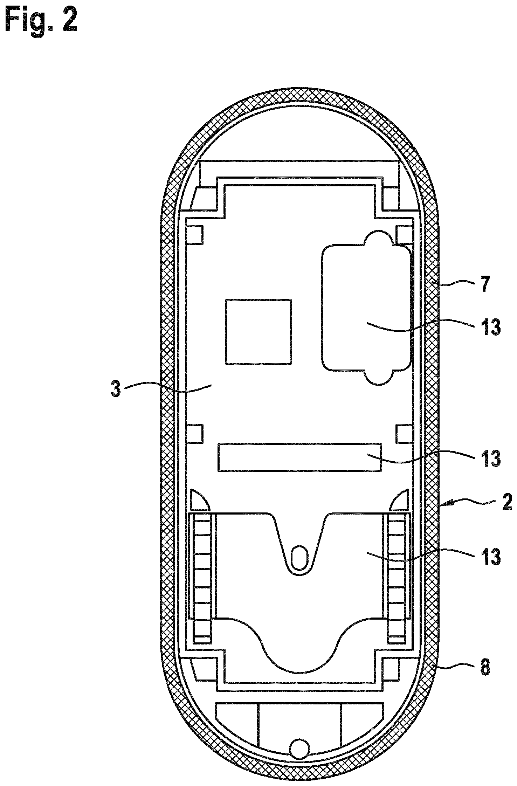

In der Figur 2 ist das Gehäuse 2 der Ladestation 1 näher gezeigt. Das Gehäuse 2 umfasst mehrere Durchbrüche 13, welche beispielsweise zur Anordnung der elektronischen Komponenten dienen. Das Gehäuse 2 wird derart mit der Stele 100 verbunden, dass der innere Raum 3 des Gehäuses 2 vorzugsweise fluiddicht gegenüber der Umwelt abgedichtet ist.

Aufgrund von Temperaturschwankungen in der Umwelt kann es dazu führen, dass sich innerhalb des Gehäuses 2 in dem Raum 3 Feuchtigkeit ansammelt, welche die elektronischen Komponenten zerstören könnte. Aus diesem Grund weist die Ladestation 1, insbesondere das Abdeckmodul 4 und/oder das Gehäuse 2 ein fluiddurchlässiges, insbesondere gasdurchlässiges Membranelement 14 auf. Zusätzlich könnte das Membranelement 14 auch als Druckausgleichselement ausgebildet sein, welches den Druck zwischen dem Raum 3 innerhalb des Gehäuses 2 und der außerhalb des Gehäuses 2 angeordneten Umwelt ausgleicht.

Im vorliegenden Ausführungsbeispiel ist vorzugsweise das Membranelement 14, welches zum Austausch von Luft- und/oder Wassermolekülen zwischen dem Raum 3 innerhalb des Gehäuses 2 und der außerhalb des Gehäuses 2 angeordneten Umwelt dient, an der Anschlusseinheit 6 angeordnet. Alternativ oder zusätzlich könnte das Membranelement 14 oder ein weiteres Membranelement auch an dem Gehäuse 2 und/oder an dem Deckelelement 5 angeordnet sein.

Zur sicheren und einfachen Anordnung bzw. Verbindung des Membranelements 14 mit dem Abdeckmodul 4, insbesondere mit der Anschlusseinheit 6 ist eine Öffnung 15 oder alternativ eine Ausnehmung vorgesehen, die zur kraftschlüssigen und/oder formschlüssigen und/oder stoffschlüssigen Anordnung des Membranelements 14 ausgebildet ist. Im vorliegenden Ausführungsbeispiel ist das Membranelement 14 mit der Öffnung 15 verrastet. Denkbar wäre es auch das Membranelement 14 in die Öffnung 15 oder in die Ausnehmung einzuspritzen oder einzulegen. Ebenfalls wäre es möglich, das Membranelement 14 in die vorzugsweise aus Kunststoff ausgebildete Anschlusseinheit 6 beim Herstellungsprozess der Anschlusseinheit 6 einzuspritzen oder zu umspritzen.

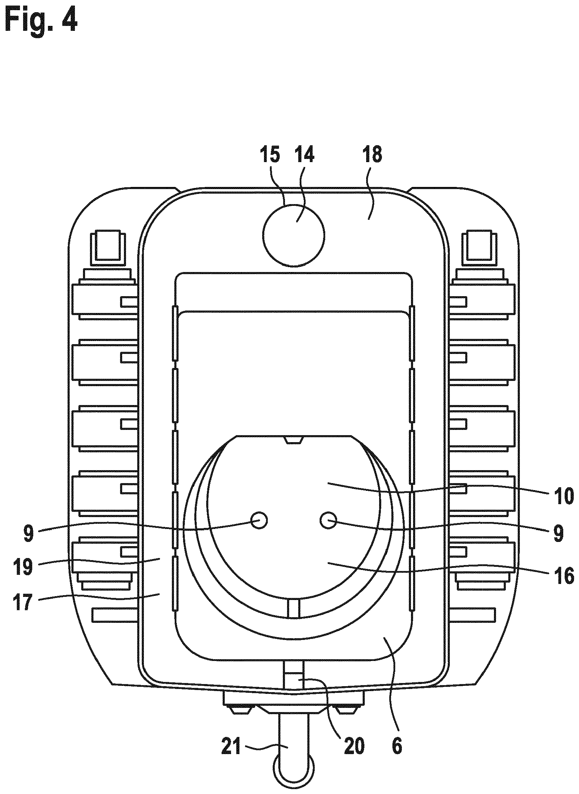

Wie man gut in der Figur 4 erkennen kann, weist die Anschlusseinheit einen als Mulde in dem Gehäuse 2 ausgebildeten ersten Abschnitt 16 zum Anordnen der Kontaktelement 9 auf, und einen zweiten Abschnitt 17 zum Anordnen mindestens eines Federelements auf und einen als Schale ausgebildeten dritten Abschnitt 18 zum Anordnen des Membranelements 14 auf. Dabei mündet der zweite Abschnitt 17 des Gehäuses 2, welcher vorzugsweise als u-förmige Nut 19 ausgebildet ist in den dritten Abschnitt 18. Wenn Flüssigkeit aus dem inneren Raum 3 des Gehäuses 2 durch das Membranelement 14 hindurchströmt, kann dieses in der Schale gesammelt werden und fließt über die u-förmige Nut 19 in einen Wasserauslasskanal 20, welcher beispielsweise mit einem Wasserablauf 21 verbunden ist, um das Wasser bzw. die Flüssigkeit in die Umwelt abzuführen.

Im vorliegenden Fall ist das durch den Benutzer bewegbare Abdeckelement 11 an der Anschlusseinheit 6 angeordnet, welches im geschlossenen Zustand das Membranelement 14 und/oder den Lagerabschnitt 10 verdeckt, insbesondere das Kontaktelement 9 verdeckt und im geöffneten Zustand den Lagerabschnitt 10, insbesondere das Kontaktelement 9 freigibt. Um das Membranelement 14 zu schützen, kann es vorteilhaft sein, wenn das Abdeckelement 11 das Membranelement 14 zumindest im geöffneten Zustand und/oder im geschlossenen Zustand verdeckt, wobei das Abdeckelement 11 beabstandet zu dem Membranelement 14 angeordnet ist. Folglich ist zwischen dem Membranelement 14 und dem Abdeckelement 11 ein Luftspalt angeordnet.

Das Membranelement 14 erhöht grundsätzlich die Lebensdauer der elektronischen Bauteile in dem Gehäuse 2. Das Membranelement 14 ist deutlich umweltfreundlicher als andere Schutzelemente wie etwa der Einsatz von Vergussmassen. Das Membranelement 14 ist durch die Label-Technologie einfach und kostengünstig aufzubringen und lässt sich mit diversen Zusatznutzen kombinieren. Als Verbindungstechnologien können das Kleben und/oder Schweißen dienen.

### Bezugszeichenliste

- 1: Ladestation
- 2: Gehäuse
- 3: Raum innerhalb des Gehäuses
- 4: Abdeckmodul
- 5: Deckelelement
- 6: Anschlusseinheit
- 7: Dichtelement
- 8: Dichtnut
- 9: Kontaktelement
- 10: Lagerabschnitt
- 11: Abdeckelement
- 12: Handhabe
- 13: Durchbruch
- 14: Membranelement
- 15: Öffnung
- 16: erster Abschnitt
- 17: zweiter Abschnitt
- 18: dritter Abschnitt
- 19: Nut
- 20: Wasserauslasskanal
- 21: Wasserablauf
- 100: Stele

## Patentansprüche

1. Ladestation (1) zum Aufladen eines Energiespeichers eines Elektrofahrzeugs, welche ein Gehäuse (2) mit einem innerhalb des Gehäuses (2) angeordneten Raum (3) zur Aufnahme von elektronischen Komponenten aufweist, und einen mit dem Gehäuse (2) verbindbaren Abdeckmodul (4), welches mindestens ein Deckelelement (5) und eine Anschlusseinheit (6) umfasst, wobei die Anschlusseinheit (6) zum Anordnen und/oder Verbinden eines Aufladeelements, insbesondere eines Ladesteckers oder einer Ladesteckdose vorgesehen ist, wobei zumindest zwischen dem Gehäuse (2) und dem Abdeckmodul (4) mindestens ein erstes Dichtelement (7) vorgesehen ist,
**dadurch gekennzeichnet, dass**
das Abdeckmodul (4) und/oder das Gehäuse (2) mindestens ein Membranelement (14) aufweist, welches zum Austausch von Luft- und/oder Wassermolekülen zwischen dem Raum (3) innerhalb des Gehäuses (2) und einer außerhalb des Gehäuses (2) angeordneten Umwelt ausgebildet ist.

2. Ladestation (1) nach Anspruch 1, **dadurch gekennzeichnet, dass** die Anschlusseinheit (6) mit mindestens einem, vorzugsweise zylinderförmigen Kontaktelement (9) versehen ist, welches insbesondere in Axialrichtung schwimmend innerhalb der Anschlusseinheit (6) gelagert ist.

3. Ladestation (1) nach Anspruch 2, **dadurch gekennzeichnet, dass** das Kontaktelement (9) wasserdicht und/oder staubdicht in der Anschlusseinheit (6) angeordnet ist.

4. Ladestation (1) nach mindestens einem der Ansprüche 1 bis 3 , **dadurch gekennzeichnet, dass** die Anschlusseinheit (6) an dem Gehäuse (2) angeordnet ist und das Deckelelement (5) sowohl mit dem Gehäuse (2) als auch mit der Anschlusseinheit (6) verbunden ist, wobei zwischen der Anschlusseinheit (6) und dem Deckelelement (5) ein zweites Dichtelement angeordnet ist.

5. Ladestation (1) nach mindestens einem der Ansprüche 1 bis 4, **dadurch gekennzeichnet, dass** die Anschlusseinheit (6) einen Lagerabschnitt (10), insbesondere eine Mulde zum Anordnen und/oder Verbinden des Aufladeelements, insbesondere des Ladesteckers oder der Ladesteckdose aufweist.

6. Ladestation nach mindestens einem der Ansprüche 1 bis 5, **dadurch gekennzeichnet, dass** das Gehäuse (2) und/oder das Abdeckmodul (4) eine Ausnehmung oder Öffnung (15) aufweist, die zur kraftschlüssigen und/oder formschlüssigen und/oder stoffschlüssigen Anordnung des Membranelements (14) ausgebildet ist.

7. Ladestation (1) nach Anspruch 6, **dadurch gekennzeichnet, dass** das Membranelement (14) in die Öffnung (15) oder Ausnehmung verrastet ist und/oder eingelegt ist und/oder umspritzt ist und/oder eingeklebt ist.

8. Ladestation (1) nach mindestens einem der Ansprüche 1 bis 7, **dadurch gekennzeichnet, dass** an der Anschlusseinheit (6) mindestens ein bewegbares Abdeckelement (11) vorgesehen ist, welches im geschlossenen Zustand das Membranelement (14) und/oder den Lagerabschnitt, insbesondere das Kontaktelement (9) verdeckt und im geöffneten Zustand den Lagerabschnitt, insbesondere das Kontaktelement (9) freigibt.

9. Ladestation (1) nach Anspruch 8, **dadurch gekennzeichnet, dass** das Abdeckelement das Membranelement (14) zumindest im geöffneten Zustand und/oder im geschlossenen Zustand verdeckt, wobei das Abdeckelement 11 beabstandet zu dem Membranelement (14) angeordnet ist, wobei zwischen dem Membranelement (14) und dem Abdeckelement (11) ein Luftspalt angeordnet ist.

10. Ladestation (1) nach mindestens einem der Ansprüche 1 bis 9, **dadurch gekennzeichnet, dass** das Membranelement (14) fluiddurchlässig, insbesondere gasdurchlässig ausgebildet ist.

11. Ladestation (1) nach mindestens einem der Ansprüche 1 bis 10, **dadurch gekennzeichnet, dass** die Anschlusseinheit (6) einen ersten Abschnitt (16) zum Anordnen der Kontaktelemente und einen zweiten Abschnitt (17) zum Anordnen mindestens eines Federelements, vorzugsweise zwei Federelementen sowie einen dritten Abschnitt (18) zum Anordnen des Membranelements (14) aufweist.

12. Ladestation (1) nach Anspruch 11, **dadurch gekennzeichnet, dass** das mindestens eine Federelement zur bewegbaren Lagerung des Abdeckelements (11) vorgesehen ist, wobei mindestens ein Federelement an dem zweiten Abschnitt (17), insbesondere an dem Gehäuse (2) befestigt ist und zusätzlich an dem Abdeckelement (11) befestigt ist.

13. Ladestation (1) nach mindestens einem der Ansprüche 1 bis 12, **dadurch gekennzeichnet, dass** der erste Abschnitt (16) als Mulde in dem Gehäuse (2) ausgebildet ist und/oder der zweite Abschnitt (17) als, vorzugsweise U-förmige, Nut in dem Gehäuse ausgebildet ist und/oder der dritte Abschnitt (18) als Schale in dem Gehäuse ausgebildet ist.

14. Ladestation (1) nach mindestens einem der Ansprüche 1 bis 13, **dadurch gekennzeichnet, dass** der zweite Abschnitt (17) des Gehäuses (2), insbesondere die Nut in den dritten Abschnitt (18) des Gehäuses (2), insbesondere in die Schale mündet.

15. Ladestation (1) nach mindestens einem der Ansprüche 1 bis 14, **dadurch gekennzeichnet, dass** das Membranelement (14) als Druckausgleichselement ausgebildet ist, welches den Druck zwischen dem Raum (3) innerhalb des Gehäuses (2) und der außerhalb des Gehäuses (2) angeordneten Umwelt ausgleicht.

16. Ladestation (1) nach mindestens einem der Ansprüche 1 bis 15, **dadurch gekennzeichnet, dass** das das Gehäuse (2) der Ladestation mit einer Stele (100) oder einer Wandung verbunden ist.

## Claims

1. Charging station (1) for charging an energy store of an electric vehicle, which charging station has a housing (2) with a compartment (3) arranged within the housing (2) for receiving electronic components, and a covering module (4) which is connectable to the housing (2) and comprises at least one cover element (5) and a connection unit (6), wherein the connection unit (6) is provided for arranging and/or connecting a charging element, in particular a charging plug or a charging socket, wherein at least one first sealing element (7) is provided at least between the housing (2) and the covering module (4), **characterized in that**
the covering module (4) and/or the housing (2) have/has at least one membrane element (14) which is designed for exchanging air molecules and/or water molecules between the compartment (3) within the housing (2) and an environment arranged outside the housing (2).

2. Charging station (1) according to Claim 1, **characterized in that** the connection unit (6) is provided with at least one, preferably cylindrical contact element (9) which is mounted floatingly in particular in the axial direction within the connection unit (6).

3. Charging station (1) according to Claim 2, **characterized in that** the contact element (9) is arranged in a watertight and/or dust-tight manner in the connection unit (6).

4. Charging station (1) according to at least one of Claims 1 to 3, **characterized in that** the connection unit (6) is arranged on the housing (2), and the cover element (5) is connected both to the housing (2) and to the connection unit (6), with a second sealing element being arranged between the connection unit (6) and the cover element (5).

5. Charging station (1) according to at least one of Claims 1 to 4, **characterized in that** the connection unit (6) has a bearing portion (10), in particular a depression for the arrangement and/or connection of the charging element, in particular the charging plug or the charging socket.

6. Charging station according to at least one of Claims 1 to 5, **characterized in that** the housing (2) and/or the covering module (4) have/has a recess or opening (15) which is designed for the force-fitting and/or form-fitting and/or integrally bonded arrangement of the membrane element (14).

7. Charging station (1) according to Claim 6, **characterized in that** the membrane element (14) is latched and/or is placed and/or is insert-moulded and/or is adhesively bonded in the opening (15) or recess.

8. Charging station (1) according to at least one of Claims 1 to 7, **characterized in that** at least one movable covering element (11) is provided on the connection unit (6), which covering element, in the closed state, covers the membrane element (14) and/or the bearing portion, in particular the contact element (9), and, in the open state, releases the bearing portion, in particular the contact element (9).

9. Charging station (1) according to Claim 8, **characterized in that** the covering element covers the membrane element (14) at least in the open state and/or in the closed state, the covering element (11) being arranged at a distance from the membrane element (14), and an airgap being arranged between the membrane element (14) and the covering element (11) .

10. Charging station (1) according to at least one of Claims 1 to 9, **characterized in that** the membrane element (14) is fluid-permeable, in particular gas-permeable.

11. Charging station (1) according to at least one of Claims 1 to 10, **characterized in that** the connection unit (6) has a first portion (16) for the arrangement of the contact elements and a second portion (17) for the arrangement of at least one spring element, preferably two spring elements, and a third portion (18) for the arrangement of the membrane element (14).

12. Charging station (1) according to Claim 11, **characterized in that** the at least one spring element is provided for the movable mounting of the covering element (11), with at least one spring element being fastened to the second portion (17), in particular to the housing (2), and additionally being fastened to the covering element (11).

13. Charging station (1) according to at least one of Claims 1 to 12, **characterized in that** the first portion (16) is designed as a depression in the housing (2) and/or the second portion (17) is designed as a, preferably U-shaped, groove in the housing and/or the third portion (18) is designed as a dish in the housing.

14. Charging station (1) according to at least one of Claims 1 to 13, **characterized in that** the second portion (17) of the housing (2), in particular the groove in the third portion (18) of the housing (2), opens in particular into the dish.

15. Charging station (1) according to at least one of Claims 1 to 14, **characterized in that** the membrane element (14) is designed as a pressure-equalizing element which equalizes the pressure between the compartment (3) within the housing (2) and the environment arranged outside the housing (2).

16. Charging station (1) according to at least one of Claims 1 to 15, **characterized in that** the housing (2) of the charging station is connected to a column (100) or to a wall.

## Revendications

1. Station de charge (1) pour charger un accumulateur d'énergie d'un véhicule électrique, qui présente un boîtier (2) avec un espace (3) ménagé à l'intérieur du boîtier (2) pour recevoir des composants électroniques, et un module de recouvrement (4) apte à être relié au boîtier (2), qui comprend au moins un élément formant couvercle (5) et une unité de raccordement (6), l'unité de raccordement (6) étant destinée au montage et/ou au raccordement d'un élément de charge, en particulier un connecteur de charge ou une prise de charge, au moins un premier élément d'étanchéité (7) étant prévu entre le boîtier (2) et le module de recouvrement (4),
**caractérisé en ce que**
le module de recouvrement (4) et/ou le boîtier (2) présente au moins un élément formant membrane (14) qui est conçu de manière à échanger des molécules d'air et/ou d'eau entre l'espace (3) situé à l'intérieur du boîtier (2) et un environnement situé à l'extérieur du boîtier (2).

2. Station de charge (1) selon la revendication 1, **caractérisée en ce que** l'unité de raccordement (6) est pourvue d'au moins un élément de contact (9), de préférence cylindrique, qui est monté de façon flottante à l'intérieur de l'unité de raccordement (6), en particulier dans la direction axiale.

3. Station de charge (1) selon la revendication 2, **caractérisée en ce que** l'élément de contact (9) est disposé dans l'unité de raccordement (6) de manière étanche à l'eau et/ou à la poussière.

4. Station de charge (1) selon au moins l'une des revendications 1 à 3, **caractérisée en ce que** l'unité de raccordement (6) est disposée sur le boîtier (2) et l'élément formant couvercle (5) est relié à la fois au boîtier (2) et à l'unité de raccordement (6), un deuxième élément d'étanchéité étant disposé entre l'unité de raccordement (6) et l'élément formant couvercle (5).

5. Station de charge (1) selon au moins l'une des revendications 1 à 4, **caractérisée en ce que** l'unité de raccordement (6) présente une partie de support (10), en particulier une cavité pour disposer et/ou relier l'élément de recharge, en particulier le connecteur de charge ou la prise de charge.

6. Station de charge selon au moins l'une des revendications 1 à 5, **caractérisée en ce que** le boîtier (2) et/ou le module de recouvrement (4) présente une cavité ou une ouverture (15) qui est conçue pour un emboîtement en force et/ou par complémentarité de forme et/ou par complémentarité de matière de l'élément formant membrane (14).

7. Station de charge (1) selon la revendication 6, **caractérisée en ce que** l'élément formant membrane (14) est inséré et/ou encliqueté et/ou surmoulé et/ou collé dans la cavité ou l'ouverture (15).

8. Station de charge (1) selon au moins l'une des revendications 1 à 7, **caractérisée en ce qu'**il est prévu sur l'unité de raccordement (6) au moins un élément formant couvercle mobile (11) qui, à l'état fermé, recouvre l'élément formant membrane (14) et/ou la partie de support, en particulier l'élément de contact (9) et qui, à l'état ouvert, libère la partie de support, en particulier l'élément de contact (9).

9. Station de charge (1) selon la revendication 8, **caractérisée en ce que** l'élément formant couvercle recouvre l'élément formant membrane (14) au moins à l'état ouvert et/ou à l'état fermé, l'élément formant couvercle mobile (11) étant disposé à distance de l'élément formant membrane (14), un espace d'air étant aménagé entre l'élément formant membrane (14) et l'élément formant couvercle (11).

10. Station de charge (1) selon au moins l'une des revendications 1 à 9, **caractérisée en ce que** l'élément formant membrane (14) est conçu pour être perméable aux fluides, et en particulier aux gaz.

11. Station de charge (1) selon au moins l'une des revendications 1 à 10, **caractérisée en ce que** l'unité de raccordement (6) présente une première section (16) pour disposer les éléments de contact et une deuxième section (17) pour disposer au moins un élément formant ressort, de préférence deux éléments formant ressort, ainsi qu'une troisième section (18) pour disposer l'élément formant membrane (14).

12. Station de charge (1) selon la revendication 11, **caractérisée en ce que** ledit au moins un élément formant ressort est prévu pour le montage mobile de l'élément formant couvercle (11), au moins un élément formant ressort étant fixé à la deuxième section (17), en particulier au boîtier (2), et étant en outre fixé à l'élément formant couvercle (11).

13. Station de charge (1) selon au moins l'une des revendications 1 à 12, **caractérisée en ce que** la première section (16) est conçue sous la forme d'une cavité dans le boîtier (2) et/ou la deuxième section (17) est conçue sous la forme d'une rainure, de préférence en forme de U, dans le boîtier et/ou la troisième section (18) est conçue sous la forme d'une coque dans le boîtier.

14. Station de charge (1) selon au moins l'une des revendications 1 à 13, **caractérisée en ce que** la deuxième section (17) du boîtier (2), en particulier la rainure, débouche dans la troisième portion (18) du boîtier (2), en particulier dans la coque.

15. Station de charge (1) selon au moins l'une des revendications 1 à 14, **caractérisée en ce que** l'élément formant membrane (14) est conçu sous la forme d'un élément d'équilibrage de pression qui équilibre la pression entre l'espace (3) à l'intérieur du boîtier (2) et l'environnement disposé à l'extérieur du boîtier (2).

16. Station de charge (1) selon au moins l'une des revendications 1 à 15, **caractérisée en ce que** le boîtier (2) de la station de charge est relié à un pilier (100) ou à une paroi.
